# EUROPEAN PATENT APPLICATION

(11) **EP 0 702 495 A1**
(43) Date of publication of application: **20.03.1996**
(21) Application number: 94202641.0
(22) Date of filing: 13.09.1994
(51) Int. Cl.: H04Q 1/00, H04L 12/56, H04Q 11/04

(54) **Switching network node for performing management functions and method therefor**

(71) Applicant: BELL TELEPHONE MANUFACTURING COMPANY Naamloze Vennootschap, B-2018 Antwerp (BE)
(72) Inventor: Roobrouck, Pascal, B-2018 Antwerp (BE); Gonze, Didier, B-6030 Marchienne-au-Pont (BE); Wulleman, Raymond Didier Albert, B-1140 Brussels (BE)

(57) **Abstract**

A node of an ATM cell switching network is described, wherein so called Operation And Maintenance functions are performed in an advantageous way on an input cell stream IS1 and on an output cell stream OS1. On IS1, the performance management PM function is performed before the alarm indication signalling AIS function which is performed before the continuity check CC function. On OS1, the CC function is performed before the AIS function which is performed before the PM function.

## Description

The present invention relates to a node of a cell switching network including an input processing means coupled to an output processing means, an input cell stream being supplied to said input processing means via an input terminal, said output processing means providing an output cell stream via an output terminal, both said cell streams including user cells and network management cells, each of said network management cells being characteristic of a network management type and including at least a continuity check cell and a performance management cell to which a continuity check function and a performance management function is associated respectively, said performance management function implying error correction on said input cell stream according to the content of a said performance management cell extracted from said input cell stream, and provision of error checking possibilities on said output cell stream by inserting a said performance management cell in said output cell stream, said continuity check function implying checking a predetermined cell rate of said input cell stream according to the content of a said continuity check cell extracted from said input cell stream, and ensuring a predetermined cell rate for said output cell stream by possible insertion of at least one said continuity check cell therein, said input and output processing means being adapted to perform said continuity check function and said performance management function on said input and output cell streams respectively.

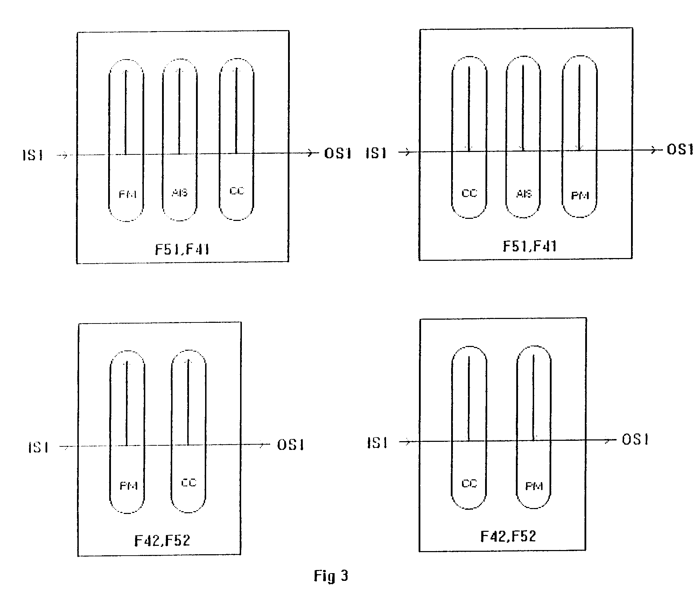

A way of performing cell stream management as in the subject node is already known in the art, e.g. from the 1992 CCITT Version of Recommendation I.610 and the use of such a node to perform this management function is inherent to the Recommendation. Indeed, referring to Fig 3 of the Recommendation, the VCC end point, the VP crossconnect as well as the VC switch each constitute such a node and it is obvious that the node has to include processing means to perform the prescribed functions. In the above CCITT Recommendation, the network management cells are called OAM cells.

The continuity check function or CC function checks the cell rate of the input cell stream. When the user cell rate of the input cell stream is below a predetermined minimum cell rate, this is an indication of a defective transmission. On the other hand, the continuity check function ensures the predetermined minimum cell rate of the user cells in the output cell stream. Indeed, when the cell rate of the output cell stream is below the mentioned predetermined rate, CC cells are inserted in the output cell stream to fulfil the role of user cells in order to increase the cell rate.

A performance management or PM cell is inserted in the output cell stream transmitted by a node every Nth user cell. This PM cell triggers the performance or PM function of a receiving node to perform an error check on these N user cells in the input cell stream received by it. In the above mentioned CCITT document, there is no further specification concerning the performance of the PM and CC functions.

An object of the present invention is to provide a node of the above known type but wherein the continuity check function and the performance management function are performed in an advantageous way.

According to the invention, this object is achieved due to the fact that said input processing means is adapted to perform said performance management function before said continuity check function and that said output processing means is adapted to perform said continuity check function before said performance management function.

In this way, a hierarchy of the above functions is advantageously introduced. Indeed, by performing the functions in the above described sequence, error checking is performed on the continuity check even when there are no user cells. On the other hand, the performance management cells can not influence the results of the continuity check function, because the performance management cells are extracted from the input cell stream before and inserted in the output cell stream after the continuity check function is performed.

Another characteristic feature of the present invention is that each of said network management cells further includes an alarm indication signalling cell to which an alarm indication signalling function is associated, said alarm indication signalling function implying insertion and extraction of alarm indication signalling cells in said output and from said input cell stream respectively, said input and output processing means being adapted to perform said alarm indication signalling function on said input and output cell streams respectively, the presence of a said alarm indication signalling cells during a predetermined time period being indicative of a network failure, said input processing means further being adapted to process said alarm indication signalling function after said performance management function and before said continuity check function, said output processing means further being adapted to process said alarm indication signalling function after said continuity check function and before said performance management function.

The alarm indication signalling cell is another management function prescribed by the above CCITT recommendation. The thus obtained sequence of performance of the functions ensures that error checking is performed on the alarm indication signalling cells. Moreover, insertion of continuity check cells in the input cell stream indicates clearing of an earlier detected network failure, even when no user cells are present in the input cell stream.

In practice, the presence of at least one alarm indication signalling cell or AIS cell in a period of for instance three seconds indicates a network failure. The absence of AIS cells during this period is thus indicative of the clearance of the network failure. However, this clearance is also indicated by the presence of user cells or of CC cells. Thus, and because the CC function is processed by the input processing means after the AIS function, clearance of the network failure can be detected even when no user cells are present.

The present invention further relates to node of a cell switching network including an input processing means coupled to an output processing means, an input cell stream being supplied to said input processing means via an input terminal, said output processing means providing an output cell stream via an output terminal, both said cell streams including user cells and network management cells, each of said network management cells being either a first, a second, a third or a fourth type to which a first, second, third and fourth type function is associated respectively, said first type function being characteristic of a first network level and of a first network range, said second type function being characteristic of said first network level and of a second network range, said third type function being characteristic of a second network level and of said first network range, said fourth type function being characteristic of said second network level and of said second network range, said first network level having a higher hierarchy than said second network level, said second network range being smaller than said first network range, said first, second, third and fourth type functions being realized on said input and output cell streams according to the content of an extracted associated first, second, third or fourth type cell from said input cell stream and by insertion thereof in said output cell stream respectively, said input and output processing means being adapted to perform said first second third and fourth type management functions on said input and output cell streams respectively.

In the above mentioned CCITT document, the first and second network levels are the F5 or Virtual Channel level and the F4 or Virtual Path level, respectively. The first and second network ranges are end-to-end and segment-to-segment, respectively. The first, second, third and fourth type functions are the well known F51, F52, F41 and F42 function types respectively.

Another characteristic feature of the present invention is that each of said network management cells is further either of a fifth or of a sixth type to which a fifth and sixth type function is associated, said fifth and sixth type function being characteristic of said first and second network level respectively, said fifth and sixth type functions being realized on said input and output cell streams according to the content of an extracted associated fifth or sixth type cell from said input cell stream and by insertion thereof in said output cell stream respectively, said input processing means being adapted to process said fifth type function between said third and said second type function and to process said sixth type function before said fourth type function, said output processing means being adapted to process said fifth type function between said second and said third type function and to process said sixth type function after said fourth type function.

The fifth and sixth type functions are the well known F5 and F4 loopback functions respectively.

Still another characteristic feature of the invention is that each of said first, second, third, fourth, fifth and sixth type cells includes either one of a said continuity check cell, a said performance management cell or a said alarm indication signalling cell.

Thus the advantages mentioned earlier with respect to the sequence of performance of the different management cells are also applicable to the above function types.

The present invention further relates to a method for providing network management functions on an input and an output cell stream of a node of a switching cell network as provided by the subject node.

The above mentioned and other objects and features of the invention will become more apparent and the invention itself will be best understood by referring to the following description of an embodiment taken in conjunction with the accompanying drawings wherein :
Fig 1 shows two network users connected via a cascade connection of several nodes of a cell switching ATM network;
Fig 2 depicts a node of a cell switching network wherein operation and maintenance functions are processed by an input and output processor and
Fig 3 schematically shows the processing of specific operation and maintenance functions.

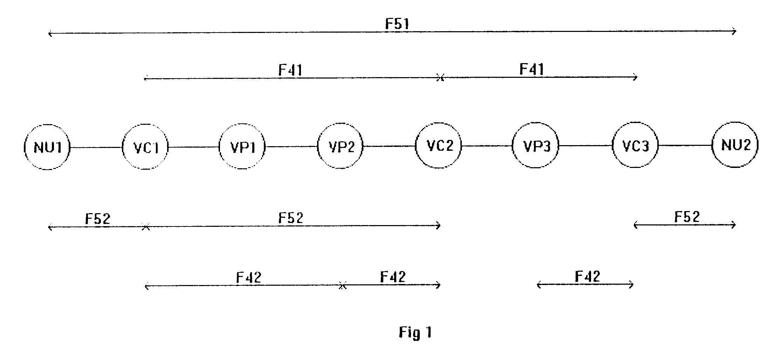

Referring to Fig 1, two network users NU1 and NU2 are coupled via the cascade connection of network nodes VC1,VP1,VP2,VC2,VP3 and VC3. The user-to-user connection NU1 to NU2 is of a first network level called Virtual Channel VC or F5, which is divided into connections VC1 to VC2 and VC2 to VC3, of a second network level called Virtual Path VP or F4. The above described connection are referred to as end-to-end VC or F51 and end-to-end VP or F41 connections because NU1 and NU2 terminate the VC connection and VC1,VC2 and VC3 terminate the VP connections. These end-to-end connections are further divided into segment VC and VP connections F52 and F42 respectively, such as NU1 to VC1, VC1 to VC2 and VC3 to NU2 being F52 connections and such as VC1 to VP2, VP2 to VC2 and VC2 to VP3 being F42 connections. VC1 and VC2 are corresponding F52 connection termination nodes in the way that e.g. VC2 and VP3 are corresponding F42 connection termination nodes. For these F51,F52,F41 and F42 connections, respective F51,F52,F41 and F42 operation and maintenance OAM functions are performed in order to provide operation and maintenance OAM services, such as e.g. a check for network characteristics or to ensure a minimum bandwidth for each type of connection. NU1 and NU2 exchange user cells which propagate from node to node. In each node the user cells are supplied as an input cell stream and provided as an output cell stream.

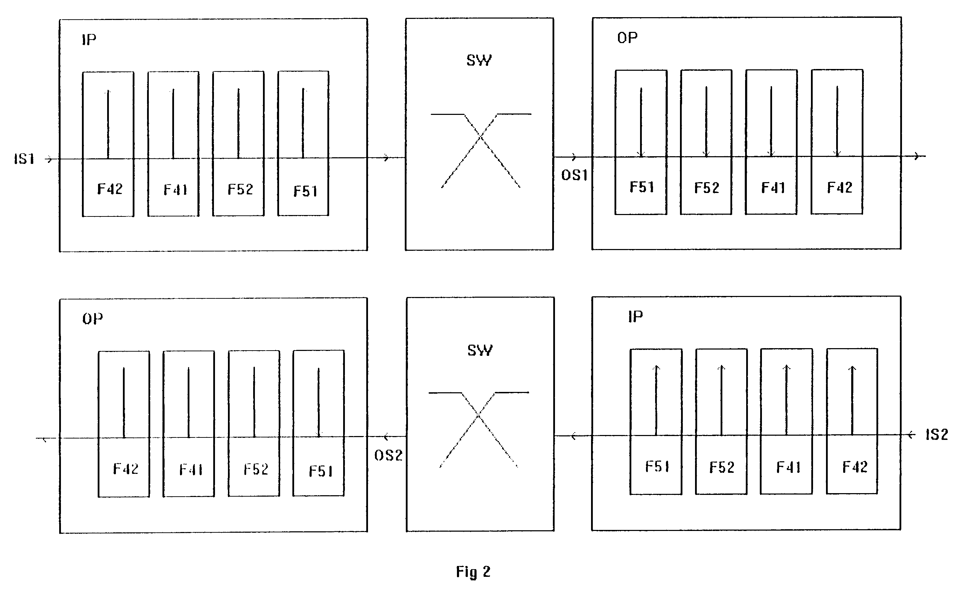

Referring to Fig 2, a node of a cell switching network including the cascade connection of an input processor IP, a switch SW and an output processor OP is shown. The input cell stream IS1 is processed by the input processor IP, switched as output cell stream OS1 to the output processor OP which then processes the output cell stream. In the input and output processor IP and OP, the different types of OAM functions are processed on the input and the output cell stream respectively. The processing of the OAM functions in the output processor involves the insertion of so called Operation and Maintenance OAM cells in the output cell stream. The processing of the F51,F52,F41 and F42 OAM functions involves the insertion of respective dedicated F51,F52,F41 and F42 OAM cells in the output cell stream. The processing of the F51,F52,F41 and F42 OAM functions in the input processor involves the extraction of these respective F51,F52,F41 and F42 OAM cells from the input cell stream. Via these OAM cells, the OAM functions provide, and are provided with information to and from corresponding functions in other nodes. The information may relate to e.g. error correcting codes for a block of user cells, or relate to e.g. the cell rate in the input cell stream of a node, or relate to the detection a network failure.

The F51,F52,F41 and F42 OAM functions are performed on the input and output cell streams by the input and output processors respectively, in the following way : The input processor first processes the F42 OAM function, then the F41 OAM function, subsequently the F52 OAM function and finally the F51 OAM function. The output processor processes the OAM functions in the reverse order i.e. F51,F52,F41,F42. In this way, the F42 OAM cells are extracted from the input cell stream before the F41 function is processed thereon. The F41,F52 and F51 OAM cells are considered as user cells by the F42 OAM function. In the same way, F52 and F51 OAM cells are considered as user cells by the F42 OAM function. Finally the F51 OAM cells are considered as user cells by the F52 OAM function.

It is to be noted that not all the OAM functions are performed in each node. In VC1, only F52,F41 and F42 are processed because VC1 is not an F51 connection termination node. In VP1 non of the OAM functions are performed, and in VP3 only F42 and F41 are processed. It is further to be noted that in the VP1 node, F51,F52,F41 and F42 OAM cells are present in the input and output cell streams. Although VP1 is not a termination node for any of the OAM functions, the input and output cell streams including the OAM cells may be monitored by OAM functions i.e. the OAM functions are processed in the input processor, but the OAM cells which are extracted from the input cell stream are bypassed (not shown) and inserted in the output cell stream again by the corresponding OAM function processed in the output processor. In this way the input cell stream is identical to the output cell stream.

In Fig 2 it is further shown that each node receives an input cell stream IS1 from another node, but it also sends an output cell stream OS2 to the latter node. In the same way, each node sends an output cell stream OS1 to yet another node, but also receives an input cell stream IS2 from the latter node. For a VC and a VP connection, respective F5 and F4 loopback functions provide a service for the F4 or F5 connection loop between an originator node and a destination node. The F4 or F5 loopback function of the originator node inserts a corresponding F4 or F5 loopback cell in the output stream OS1 of the node. This F4 or F5 loopback cell propagates to the destination node where the F4 or F5 loopback function extracts this loopback cell from the input cell stream IS1 and inserts this cell in the output cell stream OS2 of the destination node. The loopback cell then propagates to the originator node where the F4 or F5 loopback function retains the loopback cell from the input cell stream IS2. The F4 and F5 loopback functions in nodes which are connected in between the originator and destination nodes, extract (not shown) the F4 loopback cells before the F41 and F42 OAM functions are processed and insert (not shown) the F4 loopback cells after the F41 and F42 OAM functions are processed, and insert and extract the F5 loopback cells between the processing of the F41 and F52 OAM functions.

Referring to Fig 3, each F41,F42,F51 and F52 function may be a continuity check CC function or a performance management PM function. The CC function ensures a minimum cell rate for the output cell stream of a node terminating e.g. a F41 connection. When not enough user cells are present in the output cell stream, the CC function inserts CC cells in the output cell stream so as to ensure the minimum cell rate. The CC function also checks for the minimum cell rate of the input cell stream and extracts the CC cells from the input cell stream. Via the CC cells the CC functions in corresponding e.g. F41 connection termination nodes are able to exchange information with each other. The PM function provides error checking for the output cell stream of a node and performs error checking on the input cell stream of a node. For a block of N cells in the output cell stream of e.g. a F52 connection termination node, the PM function inserts one PM cell in the output cell stream. In the corresponding F52 connection termination node, the PM function performs error checking on the input cell stream and extracts the PM cell from the input cell stream. The PM functions of corresponding e.g. F42 connection termination nodes, exchange information with each other via the PM cells.

According to the present invention, the PM function is processed on the input and output cell streams before and after the CC function respectively. In this way, the PM function may always use the CC cells present in the input and output cell streams even if no user cells are present. On the other hand, the cell rate of the input cell stream checked by the CC function is not corrupted by the presence of PM cells i.e. only user cells are present.

The F51 and F41 OAM functions may further be a so called alarm indication signalling function or AIS function. The AIS function puts one corresponding AIS cell per second in the output cell stream when a network failure occurs, e.g. no cells are received via the input cell stream. The AIS function in another node retains these AIS cells from the input cell stream and thus knows that there is a network failure further along the link providing the input cell stream. If no AIS cell is received during a time period of 3 seconds, the AIS function considers the network failure cleared. But the presence of other non-AIS cells in the input stream is also an indication of a cleared network failure. According to the present invention, the AIS function is performed between the PM function and the CC function. In this way, the AIS cells take advantage of the OAM service of the PM function, and the PM function takes advantage of the AIS cell to provide this service even if no user cells are present in the output cell stream. The AIS function takes further advantage of the CC cells which are present in the input cell stream, because these CC cells are an indication of a cleared network failure even if no user cells are present in the input cell stream.

It is to be noted that the relation between the different OAM function and cells is determined for all the possible combinations of functions and cells, e.g. a F51 PM cell is considered as a user cell by the F41 CC function and by the F52 PM function, a F52 CC cell is considered as a user cell by the F41 CC function and by the F42 PM function, etc. It is now clear that the invention offers a simple, robust and advantageous solution for a complex problem.

Based on the above description of the management function to be performed in the nodes of the cell switching network, it is obvious for a person skilled in the art how the processors included therein should be realized. Therefore, they are not described in further detail.

While the principles of the invention have been described above in connection with specific apparatus, it is to be clearly understood that this description is made only by way of example and not as a limitation on the scope of the invention.

## Claims

1. Node of a cell switching network including an input processing means (IP) coupled to an output processing means (OP), an input cell stream (IS1) being supplied to said input processing means (IP) via an input terminal, said output processing means (OP) providing an output cell stream (OS1) via an output terminal, both said cell streams including user cells and network management cells, each of said network management cells being characteristic of a network management type (F51,F52,F41,F42) and including at least a continuity check cell and a performance management cell to which a continuity check function (CC) and a performance management function (PM) is associated respectively, said performance management function (PM) implying error correction on said input cell stream (IS1) according to the content of a said performance management cell extracted from said input cell stream (IS1), and provision of error checking possibilities on said output cell stream (OS1) by inserting a said performance management cell in said output cell stream (OS1), said continuity check function implying checking a predetermined cell rate of said input cell (IS1) stream according to the content of a said continuity check cell extracted from said input cell stream (IS1), and ensuring a predetermined cell rate for said output cell stream (OS1) by possible insertion of at least one said continuity check cell therein, said input and output processing means (IP,OP) being adapted to perform said continuity check function (CC) and said performance management function (PM) on said input (IS1) and output (OS1) cell streams respectively, characterized in that said input processing means (IP) is adapted to perform said performance management function (PM) before said continuity check function (CC) and that said output processing means (OP) is adapted to perform said continuity check function (CC) before said performance management function (PM).

2. Node according to claim 1, characterized in that each of said network management cells further includes an alarm indication signalling cell to which an alarm indication signalling function (AIS) is associated, said alarm indication signalling function (AIS) implying insertion and extraction of alarm indication signalling cells in said output (OS1) and from said input (IS1) cell stream respectively, said input (IP) and output (OP) processing means being adapted to perform said alarm indication signalling function (AIS) on said input and output cell streams respectively, the presence of a said alarm indication signalling cells during a predetermined time period being indicative of a network failure, said input processing means (IP) further being adapted to process said alarm indication signalling function (AIS) after said performance management function (PM) and before said continuity check function (CC), said output processing means (OP) further being adapted to process said alarm indication signalling function (AIS) after said continuity check function (CC) and before said performance management function (PM).

3. Node of a cell switching network including an input processing means (IP) coupled to an output processing means (OP), an input cell stream (IS1) being supplied to said input processing means (IP) via an input terminal, said output processing means (OP) providing an output cell stream (OS1) via an output terminal, both said cell streams including user cells and network management cells, each of said network management cells being either a first, a second, a third or a fourth type to which a first (F51), second (F52), third (F41) and fourth (F42) type function is associated respectively, said first type function being characteristic of a first network level and of a first network range, said second type function being characteristic of said first network level and of a second network range, said third type function being characteristic of a second network level and of said first network range, said fourth type function being characteristic of said second network level and of said second network range, said first network level having a higher hierarchy than said second network level, said second network range being smaller than said first network range, said first, second, third and fourth type functions being realized on said input (IS1) and output (OS2) cell streams according to the content of an extracted associated first, second, third or fourth type cell from said input cell stream (IS1) and by insertion thereof in said output cell stream (OS1) respectively, said input (IP) and output (OP) processing means being adapted to perform said first (F51), second (F52), third (F41) and fourth (F42) type management functions on said input (IS1) and output (OS1) cell streams respectively, characterized in that said input processing means (IP) is adapted to perform said type functions in the following order : first said fourth (F42) type function, then said third (F41) type function, thereafter said second (F52) type function and finally said first (F51) type function, and that said output processing means (OP) is adapted to perform said type functions in the following order : first said first (F51) type function, then said second (F52) type function, thereafter said third (F41) type function and finally said fourth (F42) type function.

4. Node according to claim 3, characterized in that each of said network management cells is further either of a fifth or of a sixth type to which a fifth and sixth type function is associated, said fifth and sixth type function being characteristic of said first and second network level respectively, said fifth and sixth type functions being realized on said input (IS1) and output (OS1) cell streams according to the content of an extracted associated fifth or sixth type cell from said input cell stream (IS1) and by insertion thereof in said output cell stream (OS1) respectively, said input processing means (IP) being adapted to process said fifth type function between said third (F41) and said second (F52) type function and to process said sixth type function before said fourth (F42) type function, said output processing means (OP) being adapted to process said fifth type function between said second (F52) and said third (F41) type function and to process said sixth type function after said fourth (F41) type function.

5. Node according to claims 4 and 2, characterized in that each of said first, second, third, fourth, fifth and sixth type cells includes either one of a said continuity check cell, a said performance management cell or a said alarm indication signalling cell.

6. Node according to claim 1 or 3, characterized in that said coupling is realized by a switching means (SW).

7. Method for processing network management functions on an input (IS1) and an output (OS1) cell stream supplied to and provided by a node of a cell switching network respectively, both said cell streams including user cells, said method including the insertion in said cell stream of network management cells, each of said network management cells being characteristic of a network management type and including at least a continuity check cell and a performance management cell to which a continuity check function (CC) and a performance management function (PM) is associated respectively, said performance management function (PM) implying error correction on said input cell stream (IS1) according to the content of a said performance management cell extracted from said input cell stream (IS1), and provision of error checking possibilities on said output cell stream (OS1) by inserting a said performance management cell in said output cell stream (OS1), said continuity check function (CC) implying checking a predetermined cell rate of said input cell stream (IS1) according to the content of a said continuity check cell from said input cell stream (IS1), and ensuring a predetermined cell rate for said output cell stream (OS1) by possible insertion of at least one said continuity check cell therein, characterized in that for said input cell stream (IS1) said performance management function (PM) is performed before said continuity check function (CC) and that for said output cell stream (OS1) said continuity check function (CC) is performed before said performance management function (PM).

8. Method according to claim 7, characterized in that each of said network management cells additionally includes an alarm indication signalling cell to which an alarm indication signalling function (AIS) is associated, said alarm indication signalling function (AIS) implying insertion and extraction of alarm indication signalling cells in said output (OS1) and from said input (IS1) cell stream respectively, the presence of a said alarm indication signalling cells during a predetermined time period being indicative of a network failure, said alarm indication signalling function (AIS) being performed after said performance management function (PM) and before said continuity check function (CC) for said input cell stream (IS1) and said alarm indication signalling function (AIS) being performed after said continuity check function (CC) and before said performance management function (PM) for said output cell stream (OS1).

9. Method for processing network management functions on an input (IS1) and an output (OS1) cell stream supplied to and provided by a node of a cell switching network, both said cell streams including user cells, said method including the step of inserting in said cell streams network management cells, each of said network management cells being of either a first, a second, a third or a fourth type to which a first (F51), a second (F52), a third (F41) and a fourth (F42) type function is associated respectively, said first (F51) type function being characteristic of a first network level and of a first network range, said second (F52) type function being characteristic of said first network level and of a second network range, said third (F41) type function being characteristic of a second network level and of said first network range, said fourth (F42) type function being characteristic of said second network level and of said second network range, said first network level having a higher hierarchy than said second network level, said second network range being smaller than said first network range, said first (F51), second (F52), third (F41) and fourth (F42) type functions being realized on said input (IS1) and output (OS1) cell streams according to the content of an extracted associated first, second, third or fourth type cell from said input cell stream (IS1) and by insertion thereof in said output cell stream (OS1) respectively, characterized in that said type functions are performed in the following order on said input cell stream (IS1) : first said fourth (F42) type function, then said third (F41) type function, thereafter said second (F52) type function and finally said first (F51) type function, and that said type functions are performed in the following order on said output stream (OS1) : first said first (F51) type function, then said second (F52) type function, thereafter said third (F41) type function and finally said fourth (F42) type function.

10. Method according to claim 9, characterized in that each of said network management cells is further either of a fifth or of a sixth type to which a fifth and sixth type function is associated, said fifth and sixth type function being characteristic of said first and second network level respectively and being realized on said input (IS1) and output (OS1) cell streams according to the content of an extracted associated fifth or sixth type cell from said input cell stream (IS1) and by insertion thereof in said output cell stream (OS1) respectively, said fifth type function being performed between said third (F41) and said second (F52) type function and said sixth type function being performed before said fourth (F42) type function for said input cell stream (IS1), said fifth type function being performed between said second (F52) and said third (F41) type function and said sixth type function being performed after said fourth (F42) type function for said output stream cell (OS1).

11. Method according to claims 8 and 10, characterized in that each of said first, second, third, fourth, fifth and sixth type cells includes either one of a said continuity check cell, a said performance management cell or a said alarm indication signalling cell.
